# EUROPÄISCHE PATENTSCHRIFT

(11) **EP 3 667 441 B1**
(45) Veröffentlichungstag und Bekanntmachung des Hinweises auf die Patenterteilung: **06.10.2021**
(21) Anmeldenummer: 18211286.2
(22) Anmeldetag: 10.12.2018
(51) Int. Cl.: G05B 19/042, G05B 19/418, H04L 9/00

(54) **VERFAHREN UND VORRICHTUNG ZUR VERSCHLÜSSELTEN STEUERUNG EINER TECHNISCHEN ANLAGE**
METHOD AND DEVICE FOR ENCRYPTED CONTROLLING OF A TECHNICAL SYSTEM
PROCÉDÉ ET DISPOSITIF DE COMMANDE CRYPTÉE D'UNE INSTALLATION TECHNIQUE

(43) Veröffentlichungstag der Anmeldung: 17.06.2020
(73) Patentinhaber: ETM professional control GmbH, 7000 Eisenstadt (AT)
(72) Erfinder: Högerl, Daniel, 7053 Hornstein (AT)
(74) Vertreter: Maier, Daniel Oliver

(56) Entgegenhaltungen:
- EP-A1- 2 620 826
- EP-A1- 2 790 078
- US-A1- 2011 264 920

## Beschreibung

Die Erfindung betrifft ein Verfahren und eine Vorrichtung zur Steuerung einer technischen Anlage.

Eine Steuerung mit SIMATIC WinCC Open Architecture ist ein Siemens SCADA-System für das Visualisieren und Bedienen von Prozessen, Fertigungsabläufen, Maschinen und Anlagen in allen Branchen. Verteilte Systeme ermöglichen die Kopplung von autonomen SIMATIC WinCC Open Architecture Systemen über ein Netzwerk. Jedes Teilsystem kann dabei entweder als Einplatz- oder Mehrplatzsystem, jeweils redundant oder nicht redundant, konfiguriert sein.

Unter Supervisory Control and Data Acquisition (SCADA) versteht man das Überwachen und Steuern technischer Prozesse mittels eines Computer-Systems.

Automationen können entsprechend dem OSI-Schichtenmodell in mehrere Schichten unterteilt werden, wobei Level-1 die prozessnahe Schicht ist. Der Terminus SCADA bezieht sich gewöhnlich auf zentrale/dezentrale Systeme, die die gesamte Installation überwachen, visualisieren sowie steuern und regeln. Der größte Teil der Regelung wird automatisch durch Fernbedienungsterminals (RTU) oder durch Speicherprogrammierbare Steuerungen (SPS) beziehungsweise Level-l-Automationen durchgeführt.

Derartige Steuerungen werden für eine Vielzahl von Steueraufgaben für industriellen Anlagen eingesetzt. Dabei kann es erwünscht sein, dass Teile der Anlagensteuerung als "internet of things" ausgeführt sind, das heißt über das Internet zugänglich sind, sodass ein Zugriff auf eine Anlage durch mehrere Benutzer möglich ist. In diesem Zusammenhang ist die Datensicherheit bei einem individuellen Zugriff auf eine gemeinsame Anlage ein wichtiger Aspekt, dem heutzutage unzureichend Beachtung geschenkt wird. Verschiedene Benutzer sollen auf eine Steuerung zugreifen können, ohne Daten der jeweils anderen Benutzer zu kennen. Ferner soll die Anlage gegenüber einem unbefugten Zugriff beispielsweise aus dem Internet geschützt sein.

Eine umfangreiche Verschlüsselung von Daten in einem Steuerungssystem geht häufig mit einem signifikant hohen Bedarf an teurer Rechenleistung einher. Insbesondere bei speicherprogrammierbaren Steuerungen oder Level-1-Geräten wie programmierbare Treiber-Schaltungen steht jedoch Rechenleistung oft nur sehr eingeschränkt zur Verfügung.

In der Veröffentlichung EP 2 790 078 A1 ist ein Verfahren zum Regeln einer Prozess- und/oder Fertigungsanlage offenbart, bei welchem ein Beobachtungsdatensatz erfasst und über einen Feldbus verschlüsselt an eine zentrale Steuervorrichtung der Anlage übertragen wird. In der zentralen Steuervorrichtung wird ein Stelldatensatz aus dem verschlüsselten Beobachtungsdatensatz gebildet, ohne den Beobachtungsdatensatz zu entschlüsseln. So wird ein verschlüsselter Stelldatensatz erzeugt, der über den Feldbus an Stelleinheiten der Anlage ausgesendet wird, und erst in Stelleinheiten der jeweilige verschlüsselte Stelldatensatz zum Stellen der zugehörigen Anlagenkomponente entschlüsselt wird.

In der Veröffentlichung EP 2 620 826 A1 ist ein Verfahren zum Ermitteln von Bewegungsdaten für eine Bearbeitungsmaschine beschrieben, wobei Geometriedaten als Grundlage für eine Bewegung der Bearbeitungsmaschine an einer Bearbeitungsstation lokal verschlüsselt und in eine Rechnerwolke eingespeist werden. Innerhalb der Rechnerwolke werden die Bewegungsdaten für eine Bewegung der Bearbeitungsmaschine aufgrund der verschlüsselten Geometriedaten ermittelt. Die Bewegungsdaten aus der Cloud werden an eine Bearbeitungsstation oder die Bearbeitungsstation übermittelt und wobei die Bewegungsdaten mit dem bei der Verschlüsselung der Geometriedaten verwendeten Schlüssel entschlüsselt.

In der Veröffentlichung US 2011/264920 A1 ist ein Verfahren basierend auf symmetrischer homomorpher Verschlüsselung genannt. Dabei werden Kommunikation, Speicherung, der Abruf und die Berechnung von verschlüsselten Daten unterstützt, die außerhalb des Standorts gespeichert sind. Das System kann zur Aggregation von Daten verwendet werden. Ein Drittsystem kann bei der Berechnung statistischer Informationen und logischer Abfragen der verschlüsselten Daten hinzugenommen werden, welcher jedoch die Daten nicht selbst entschlüsseln kann. Das verwendete Protokoll bietet Dritten die Möglichkeit, Berechnungen an sensiblen Daten durchzuführen, ohne etwas über diese Datenwerte zu erfahren.

Es ist Aufgabe der Erfindung, die Datensicherheit bei der Steuerung einer technischen Anlage auf effiziente Weise zu erhöhen.

Die Aufgabe wird durch ein Verfahren eingangs genannter Art gelöst, indem eine erste Geräte-Steuervorrichtung einen öffentlichen Schlüssel an eine Eingabevorrichtung und eine Steuerung überträgt,
und die Eingabevorrichtung zumindest einen Geräteparameter erfasst, mit dem öffentlichen Schlüssel verschlüsselt und als verschlüsselte Eingangsdaten an die Steuerung überträgt,
und die Steuerung aus den verschlüsselten Eingangsdaten und zumindest einer gespeicherten, verschlüsselten Modelleigenschaft, welche die technische Anlage durch zumindest eine Abbildungsfunktion beschreibt, zumindest einen verschlüsselten Steuerbefehl erzeugt, ohne dabei die verschlüsselten Eingangsdaten zu entschlüsseln, und an die erste Geräte-Steuervorrichtung überträgt,
und die erste Geräte-Steuervorrichtung mit Hilfe des zumindest einen verschlüsselten Steuerbefehles die technische Anlage steuert,
wobei die Eingabevorrichtung, die Steuerung und die erste Geräte-Steuervorrichtung bei der Verschlüsselung ein Verfahren zur Erzeugung einer homomorphen Verschlüsselung verwenden.

Dadurch wird erreicht, dass die Steuerung bereits verschlüsselte Eingangsdaten weiterverarbeiten kann, ohne diese zu entschlüsselt. Somit wird der Bedarf von Rechenleistung reduziert. Außerdem liegen die Eingangsdaten innerhalb der Steuerung nur in verschlüsselter Form vor, sodass ein unbefugter Zugriff auf die Eingangsdaten ausgeschlossen werden kann. Somit kann die Steuerung durch die Verwendung einer homomorphen Verschlüsselung auch in einer unsicheren Umgebung durchgeführt werden, beispielsweise auf einem Server in einer Cloud, also im Internet.

Ein Steuerbefehl kann somit durch Daten mehrerer Nutzer zusammengesetzt werden, ohne dass die Nutzer die verschlüsselten Daten vorher entschlüsseln müssen. Ein zusammengesetzter Steuerbefehl kann mehrere Parameter aufweisen, welche jeweils von unterschiedlichen Nutzern stammen. Es kann aber auch der Steuerbefehl selbst Gegenstand der homomorphen Verschlüsselung sein, also unabhängig von anderen Nutzern festgelegt werden. Im Zusammenhang mit der Erfindung kann unter einem Steuerbefehl auch eine Abfolge von mehreren Instruktionen, das heißt eine Programmcode-Sequenz verstanden werden.

Eine homomorphe Verschlüsselung ist ein kryptographisches Verfahren, welches über homomorphe Eigenschaften verfügt, wodurch sich Berechnungen auf dem Geheimtext durchführen lassen, die mathematischen Operationen auf den entsprechenden Klartexten entsprechen.

Mit Hilfe homomorpher Kryptographie lassen sich Berechnungen auf verschiedene Systeme (beispielsweise ein Server) verteilen, die einander nicht vertrauen. Das spielt eine große Rolle beim Cloud-Computing und verspricht einen großen Gewinn an Datenschutz. Verschlüsselte Daten werden in einer Cloud abgelegt. Dort können sie durchsucht oder verarbeitet werden, ohne sie zu entschlüsseln. Das Ergebnis wird verschlüsselt zurückgesendet. Der Cloud-Anbieter kennt dadurch weder die Daten noch die Ergebnisse.

Es gibt eine Reihe von Kryptosystemen, die zumindest partiell homomorphe Verschlüsselung bei annehmbarem Aufwand erlauben. Darüber hinaus existieren auch voll-homomorphe Verschlüsselungssysteme, die jedoch auf Grund ihrer komplexen Gestalt und Rechenintensivität bislang keine Verwendung finden.

Beispiele für homomorphe Verschlüsselungssysteme sind Kryptosysteme mit Verfahren nach Goldwasser-Micali, nach Benaloh, Paillier oder nach Okamoto-Uchiyama.

Der zumindest eine Geräteparameter kann beispielsweise ein Parameter zur Steuerung des Betriebs oder bei der Wartung, aber auch der Konfiguration der technischen Anlage sein. Die technische Anlage kann beispielsweise eine Komponente, ein Gerät oder eine technische Anlage mit mehreren Komponenten, Geräten oder Vorrichtungen sein.

Bei Verwendung eines einzigen Geräteparameters kann die technische Anlage gegenüber einem unbefugten Zugriff beispielsweise aus dem Internet geschützt werden.

Es ist vorteilhaft, wenn die Eingabevorrichtung zumindest zwei Geräteparameter erfasst, verschlüsselt und als verschlüsselte Eingangsdaten an eine Steuerung überträgt. Dadurch kann die Anlage gegenüber einem unbefugten Zugriff anderer Benutzer geschützt werden. Die Erfassung, die Verschlüsselung und die Übertragung kann dabei getrennt voneinander erfolgen.

In einer Weiterbildung der Erfindung ist es vorgesehen, dass die Steuerung den erzeugten, zumindest einen verschlüsselten Steuerbefehl einem Prozessmodell der technischen Anlage zuführt, wobei das Prozessmodell die technische Anlage beschreibt, und die Steuerung bei der Erzeugung des zumindest einen, verschlüsselten Steuerbefehls das Prozessmodell verwendet.

Dadurch wird erreicht, dass das Prozessmodell beispielsweise aktuelle Änderungen in der Konfiguration der technischen Anlage berücksichtigen kann.

In einer Weiterbildung der Erfindung ist es vorgesehen, dass das Prozessmodell durch ein digitales Modell, beispielsweise in Form eines digitalen Zwillings, der technischen Anlage mit Prozessparametern umfasst, aus welchem die zumindest eine Modelleigenschaft abgeleitet wird.

Dadurch wird erreicht, dass das Prozessmodell beispielsweise durch ein digitales Modell die technische Anlage realitätsgetreu mit allen Prozessparametern abbilden kann und Steuerbefehle erzeugen kann, welche mittels Einbeziehung künstlicher Intelligenz oder maschinellen Lernens ermittelt beziehungsweise bestimmt wurden.

Folglich ist es in einer Weiterbildung der Erfindung vorgesehen, dass der zumindest eine Steuerbefehl unter Einbeziehung künstlicher Intelligenz oder maschinellen Lernens ermittelt beziehungsweise bestimmt wird.

In einer Weiterbildung der Erfindung ist es vorgesehen, dass die erste Geräte-Steuervorrichtung eine zweite Geräte-Steuervorrichtung mit einem verschlüsselten Steuerbefehl steuert.

Dadurch kann eine Kaskadierung von technischen Anlagen durchgeführt werden, beispielsweise in komplexen Anlagen zur Herstellung von Halbleitern oder Leiterplatten, Kraftfahrzeugen oder chemischen Produkten.

In einer Weiterbildung der Erfindung ist es vorgesehen, dass die erste Geräte-Steuervorrichtung zumindest einen verschlüsselten Steuerbefehl von einer zweiten Geräte-Steuervorrichtung empfängt und in dem zumindest einen Geräte-Steuerbefehl berücksichtigt.

Dadurch kann eine Kaskadierung von technischen Anlagen durchgeführt werden, wie vorher ausgeführt.

In einer Weiterbildung der Erfindung ist es vorgesehen, dass die erste Geräte-Steuervorrichtung zumindest einen, vorzugsweise unverschlüsselten Geräte-Messwert ermittelt, welcher bei der Erzeugung der Geräte-Steuerbefehle verwendet wird.

Dadurch wird erreicht, dass Sensorinformationen aus der technischen Anlage berücksichtigt werden können, um beispielsweise das Prozessmodell anzupassen. Ferner ist es dadurch möglich, nicht verschlüsselte Daten eines Sensors auf technisch effiziente Weise zu berücksichtigen, indem die Verschlüsselung der Geräte-Steuerbefehle an einer günstigen Stelle, hier in der Steuervorrichtung, zu entfernen. Dies kann insbesondere dann sinnvoll sein, wenn komplexe mathematische Berechnungen durchgeführt werden, welche in einem verschlüsselten Verfahren eine zu hohe Rechenkapazität erfordern würde.

In einer Weiterbildung der Erfindung ist es vorgesehen, dass die erste Geräte-Steuervorrichtung ein Schlüsselpaar mit einem privaten Schlüssel und einem öffentlichen Schlüssel erzeugt und an die Eingabevorrichtung und die Steuerung überträgt.

Dadurch wird erreicht, dass auf eine einfache, aber durchgängig sichere Weise eine homomorphe Verschlüsselung implementiert werden kann.

In einer Weiterbildung der Erfindung ist es vorgesehen, dass die Geräte-Steuerbefehle verschlüsselte Geräte-Steuerbefehle und/oder unverschlüsselte Geräte-Steuerbefehle aufweisen. Dies kann insbesondere dann sinnvoll sein, wenn komplexe mathematische Berechnungen durchgeführt werden, welche in einem voll-verschlüsselten Verfahren eine zu hohe Rechenkapazität erfordern würde.

Die Erfindung betrifft ferner eine Vorrichtung zur Steuerung einer technischen Anlage, umfassend zumindest ein Eingabemodul, eine Steuerung und erste Geräte-Steuervorrichtung,
wobei die Eingabevorrichtung dazu eingerichtet ist, zumindest einen Geräteparameter zu erfassen, zu verschlüsseln und als verschlüsselte Eingangsdaten an die Steuerung zu übertragen, und
die Steuerung dazu eingerichtet ist, aus den verschlüsselten Eingangsdaten und zumindest einer gespeicherten, verschlüsselten Modelleigenschaft zumindest einen verschlüsselten Steuerbefehl zu erzeugen und an die erste Geräte-Steuervorrichtung zu übertragen, und
die erste Geräte-Steuervorrichtung dazu eingerichtet ist, mit Hilfe des zumindest eines verschlüsselten Steuerbefehles die technische Anlage anzusteuern,
wobei die Vorrichtung dazu eingerichtet ist, die technische Anlage durch das Verfahren nach einem der vorhergehenden Ansprüche zu steuern.

In einer Weiterbildung der Erfindung ist es vorgesehen, dass die Steuerung in einer Cloud gelegen ist. Die Steuerung kann beispielsweise als virtuelle Maschine auf einem Server ausgeführt werden, wobei der Server Teil einer Cloud ist.

In einer Weiterbildung der Erfindung ist es vorgesehen, dass die technische Anlage eine Produktionsanlage oder ein Gerät ist. Die technische Anlage kann im Zusammenhang mit der Erfindung eine Komponente, ein Gerät oder eine technische Anlage sein, oder eine Kombination daraus und eine oder mehrere Stufen, welche jeweils aus technischen Anlagen gebildet sein können, aufweisen.

Die Komponente kann ein Teil eines komplexen Systems sein, beispielsweise eine elektronisch steuerbare Ventilsteuerungseinheit, eine elektronisch steuerbare Spannungsversorgung, ein elektronischer Sensor oder ein elektrischer Schaltkontakt sein.

Ein Gerät kann beispielsweise eine elektrische Pumpe oder eine Leistungssteuerung eines elektrischen Motors sein.

Eine technische Anlage kann eine industrielle Produktionsanlage, wie beispielweise eine Produktionsanlage für Halbleiter, eine Bestückungsanlage für Leiterplatten oder eine Anlage für chemische Prozessierung sein.

In einer Weiterbildung der Erfindung ist es vorgesehen, dass die Geräte-Steuervorrichtung eine speicherprogrammierbare Steuerung oder eine programmierbare Treiber-Schaltung ist. Dadurch wird ein effizientes kryptographisches System auf einer speicherprogrammierbaren Steuerung oder einer programmierbaren Treiber-Schaltung erreicht, welches es Benutzern erlaubt, auf eine kryptographisch sichere Weise mittels der speicherprogrammierbaren Steuerung Prozesse einer technische Anlage oder eine technische Vorrichtung zu steuern.

Die genannten Merkmale der Weiterbildungen der Erfindung können untereinander kombiniert werden.

Die Erfindung wird nachfolgend anhand von in den beigeschlossenen Zeichnungen dargestellten Ausführungsbeispielen näher erläutert. In den Zeichnungen zeigt:
Fig. 1 schematisch ein Blockschaltbild eines ersten Ausführungsbeispiels für das erfindungsgemäße Verfahren,
Fig. 2 schematisch ein Blockschaltbild eines zweiten Ausführungsbeispiels für das erfindungsgemäße Verfahren.

Die Figuren zeigen Anordnungen gemäß der Erfindung, wobei klar ist, dass weitere Komponenten zur Ausführung des Verfahrens nötig sind, beispielsweise Netzwerkkomponenten wie Router, oder Treiberschaltungen für Geräte, Sensorvorrichtungen zur Überwachung von Geräten, Datenspeicher, Rechenvorrichtungen, usw. Diese Komponenten werden zur besseren Übersicht nicht dargestellt.

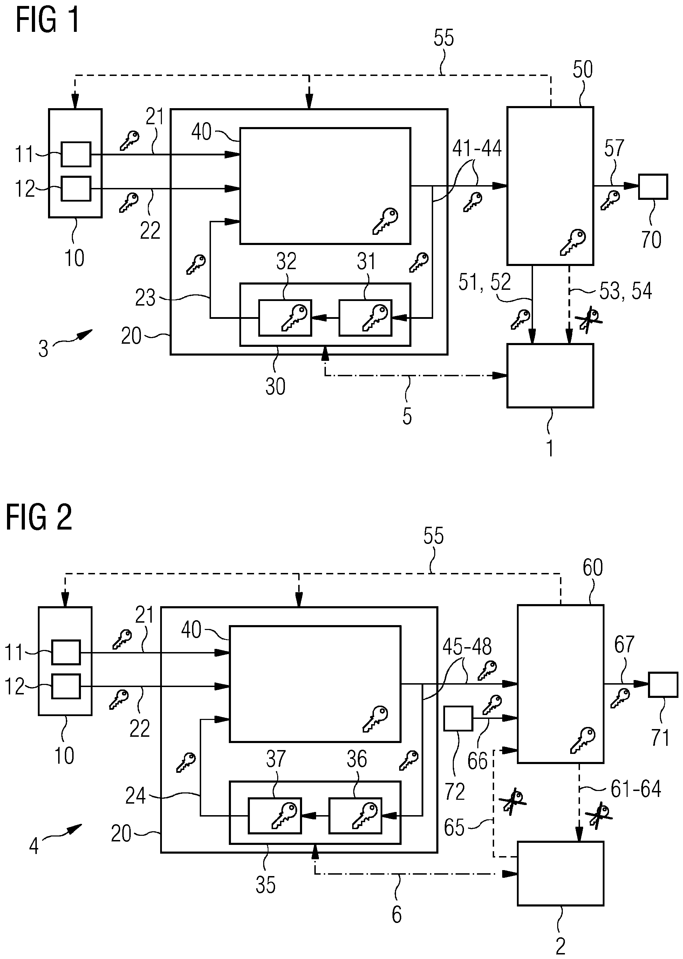

In **Fig. 1** ist schematisch ein erstes Ausführungsbeispiel der Erfindung zur Steuerung einer technischen Anlage 1 gezeigt.

Eine Vorrichtung 3 zum Ausführen eines Verfahrens zur Steuerung der technischen Anlage 1 weist eine Eingabevorrichtung 10 mit zwei Eingabemodulen, eine, in einer Cloud gelegene Steuerung 20 und eine erste Geräte-Steuervorrichtung 50 in Form einer speicherprogrammierbaren Steuerung auf.

Ein Steuerverfahren für die Steuerung 20 wird in diesem Beispiel auf einer virtuellen Maschine eines in einer Cloud gelegenen Server durchgeführt. Dadurch ist es möglich auch komplexe Berechnungen durchzuführen, beispielsweise Verfahren der künstlichen Intelligenz oder des maschinellen Lernens. Derartige Berechnungen sind auf einer speicherprogrammierbaren Steuerung meist nicht möglich.

Die technische Anlage 1 ist beispielsweise eine Produktionsanlage für Kraftfahrzeuge mit mehreren Teilanlagen.

Die Eingabemodule der Eingabevorrichtung sind dazu eingerichtet, Geräteparameter 11, 12 in Form von Erfassungsdaten zu erfassen, zu verschlüsseln und als verschlüsselte Eingangsdaten 21, 22 an die Steuerung 20 zu übertragen.

Die Eingangsdaten 21, 22 können beispielsweise ein einzelnes Attribut für einen Steuerbefehl sein, oder auch einen Datensatz aus mehreren Daten aufweisen. Die Eingangsdaten 21, 22 müssen nicht unbedingt mit einem gemeinsamen Steuerbefehl in Zusammenhang stehen, wobei es besonders vorteilhaft ist, wenn die Eingangsdaten 21, 22 in einem gemeinsamen Steuerbefehl weiterverarbeiten werden, da eine, mittels einer homomorphen Verschlüsselung geschaffenen Datensicherheit auf eine besonders einfache Weise erzielt wird, wie im Weiteren genauer ausgeführt wird.

Die Eingabemodule erfassen Erfassungsdaten 11, 12, beispielsweise Parameter für die Steuerung einer technischen Anlage 1 durch ein Mensch-Maschine-Interface erfassen. Die Eingabevorrichtung 10 verschlüsselt die Erfassungsdaten 11, 12 mit Hilfe eines Schlüssels 55 und erzeugt verschlüsselte Daten 21, 22.

Der Schlüssel 55 ist beispielsweise der öffentliche Schlüssel eines asymmetrischen Schlüsselpaars.

Die erste Geräte-Steuervorrichtung 50 überträgt den öffentlichen Schlüssel 55 an die Eingabevorrichtung 10 und an die Steuerung 20. Mit anderen Worten erzeugt die erste Geräte-Steuervorrichtung 50 ein Schlüsselpaar mit einem privaten Schlüssel und einem öffentlichen Schlüssel, wobei der öffentliche Schlüssel an die weiteren Funktionseinheiten zur Verschlüsselung von Parametern beziehungsweise Erfassungsdaten 11, 12 verwendet wird.

Die Steuerung 20 ist dazu eingerichtet, aus den verschlüsselten Eingangsdaten 21, 22 und zumindest einer gespeicherten, verschlüsselten Modelleigenschaft 31 verschlüsselte Steuerbefehle 41-44 zu erzeugen und an die erste Geräte-Steuervorrichtung 50 zu übertragen.

Die erste Geräte-Steuervorrichtung 50 ist dazu eingerichtet, mit Hilfe der verschlüsselten Steuerbefehle 41-44 die technische Anlage 1 anzusteuern.

Die Geräte-Steuerbefehle 51-54 können sowohl verschlüsselte Geräte-Steuerbefehle 51, 52, als auch unverschlüsselte Geräte-Steuerbefehle 53, 54 aufweisen.

Die Steuerbefehle 41-44 beziehungsweise die Geräte-Steuerbefehle 51-54 können Steuerinstruktionen sowie Parameter umfassen, wobei einzelne Parameter oder Steuerinstruktionen von verschiedenen Benutzern mittels der Geräteparameter 11, 12 der Vorrichtung zur Steuerung einer technischen Anlage 1 zugeführt werden.

Dabei ist die Vorrichtung 3 dazu eingerichtet, folgendes Verfahren auszuführen:
- Erfassen von Geräteparametern 11, 12, anschließend Verschlüsseln und Übertragen als verschlüsselte Eingangsdaten 21, 22 an die Steuerung 20 durch die Eingabevorrichtung 10,
- Erzeugen verschlüsselter Steuerbefehle 41-44 aus den verschlüsselten Eingangsdaten 21, 22 und zumindest einer gespeicherten, verschlüsselten Modelleigenschaft 31, welche die technische Anlage 1 durch eine Abbildungsfunktion 5 beschreibt, durch die Steuerung 20, ohne dabei die verschlüsselten Eingangsdaten 21, 22 zu entschlüsseln,
- Übertragen der verschlüsselten Steuerbefehle 41-44 an eine erste Geräte-Steuervorrichtung 50,
- Steuern die technische Anlage 1, 2 mit Hilfe der Steuerbefehle 41-44 durch die erste Geräte-Steuervorrichtung 50,
wobei die Eingabevorrichtung 10, die Steuerung 20 und die erste Geräte-Steuervorrichtung 50 bei der Verschlüsselung ein Verfahren zur Erzeugung einer homomorphen Verschlüsselung verwenden.

Die Steuerung 20 führt die erzeugten verschlüsselten Steuerbefehle 41-44 einem Prozessmodell 30 der technischen Anlage 1 zu. Das Prozessmodell 30 beschreibt die technische Anlage 1.

Die Steuerung 20 verwendet bei der Erzeugung verschlüsselten Steuerbefehle 41-44 das Prozessmodell 30.

Das Prozessmodell 30 weist einen digitalen Zwilling 31 der technischen Anlage 1 auf, aus welchem die Modelleigenschaft 32 abgeleitet wird.

Die Steuerbefehle 41-48 können unter Einbeziehung künstlicher Intelligenz oder maschinellen Lernens ermittelt beziehungsweise bestimmt werden.

Die erste Geräte-Steuervorrichtung 50 kann optional eine zweite Geräte-Steuervorrichtung 70 mit einem verschlüsselten Steuerbefehl 57 steuern.

In **Fig. 2** ist schematisch ein zweites Ausführungsbeispiel der Erfindung gezeigt.

Eine Vorrichtung 4 zur Steuerung einer technischen Anlage 2 weist eine Eingabevorrichtung 10 mit zwei Eingabemodulen, eine, in einer Cloud gelegene Steuerung 20 und eine erste Geräte-Steuervorrichtung 60 in Form einer speicherprogrammierbaren Steuerung auf. Dazu gelten die Ausführungen der Fig. 1 entsprechend.

Im zweiten Ausführungsbeispiel kann die erste Geräte-Steuervorrichtung 60 einen verschlüsselten Steuerbefehl 66 von einer zweiten Geräte-Steuervorrichtung 72 empfangen und in den Geräte-Steuerbefehlen 61-64 berücksichtigen.

Im zweiten Ausführungsbeispiel kann die erste Geräte-Steuervorrichtung 60 einen unverschlüsselten Geräte-Messwert 65 ermitteln, welcher bei der Erzeugung der Geräte-Steuerbefehle 61-64 verwendet wird.

Beispielsweise kann der Geräte-Messwert 65 durch eine Messeinrichtung ermittelt werden, beispielsweise eine Temperaturmessung an der technischen Anlage 2, und mittels der Abbildungsfunktion 6 in das Prozessmodell 35 der technischen Anlage 2 zurückgeführt werden, um Änderungen in der technischen Anlage 2 oder bei deren Betrieb entsprechend zu berücksichtigen.

### Bezugszeichenliste

- 1, 2: Gerät, technische Anlage
- 3, 4: Vorrichtung
- 5, 6: Abbildungsfunktion
- 10: Eingabevorrichtung
- 11, 12: Eingangsdaten
- 21-24: verschlüsselte Daten
- 20: Steuerung
- 30, 35: Prozessmodell
- 31, 36: Digitaler Zwilling
- 32, 37: Modelleigenschaften
- 40: Rechenvorrichtung
- 41-48: verschlüsselte Steuerbefehle
- 50, 60, 70-72: Geräte-Steuervorrichtung
- 51, 52: verschlüsselte Geräte-Steuerbefehle
- 53, 54, 61-64: unverschlüsselte Geräte-Steuerbefehle
- 65: Messwert von Gerät
- 66: verschlüsselter Steuerbefehl von anderer Geräte-Steuervorrichtung
- 57, 67: verschlüsselter Steuerbefehl zu weiterer Geräte-Steuervorrichtung

## Patentansprüche

1. Verfahren zur Steuerung einer technischen Anlage (1, 2), **dadurch gekennzeichnet, dass**
eine erste Geräte-Steuervorrichtung (50, 60) einen öffentlichen Schlüssel (55) an eine Eingabevorrichtung (10) und eine Steuerung (20) überträgt,
und die Eingabevorrichtung (10) zumindest einen Geräteparameter (11, 12) erfasst, mit dem öffentlichen Schlüssel (55) verschlüsselt und als verschlüsselte Eingangsdaten (21, 22) an die Steuerung (20) überträgt,
und die Steuerung (20) aus den verschlüsselten Eingangsdaten (21, 22) und zumindest einer gespeicherten, verschlüsselten Modelleigenschaft (31, 36), welche die technische Anlage (1, 2) durch zumindest eine Abbildungsfunktion (5, 6) beschreibt, zumindest einen verschlüsselten Steuerbefehl (41-48) erzeugt, ohne dabei die verschlüsselten Eingangsdaten (21, 22) zu entschlüsseln, und an die erste Geräte-Steuervorrichtung (50, 60) überträgt,
und die erste Geräte-Steuervorrichtung (50, 60) mit Hilfe des zumindest einen verschlüsselten Steuerbefehles (41-48) die technische Anlage (1, 2) steuert,
wobei Eingabevorrichtung (10), die Steuerung (20) und die erste Geräte-Steuervorrichtung (50, 60) bei der Verschlüsselung ein Verfahren zur Erzeugung einer homomorphen Verschlüsselung verwenden.

2. Verfahren nach dem vorhergehenden Anspruch, wobei die Eingabevorrichtung zumindest zwei Geräteparameter erfasst, verschlüsselt und als verschlüsselte Eingangsdaten an eine Steuerung überträgt.

3. Verfahren nach einem der vorhergehenden Ansprüche, wobei die Steuerung (20) den erzeugten zumindest einen verschlüsselten Steuerbefehl (41-48) einem Prozessmodell (30, 35) der technischen Anlage (1, 2) zuführt, wobei das Prozessmodell (30, 35) die technische Anlage (1, 2) beschreibt, und die Steuerung (20) bei der Erzeugung des zumindest einen verschlüsselten Steuerbefehls (41-48) das Prozessmodell (30, 35) verwendet.

4. Verfahren nach dem vorhergehenden Anspruch, wobei das Prozessmodell (30, 35) durch ein digitales Modell, beispielsweise in Form eines digitalen Zwillings (31, 36), der technischen Anlage (1, 2) mit Prozessparametern umfasst, aus welchem die zumindest eine Modelleigenschaft (32, 37) abgeleitet wird.

5. Verfahren nach einem der vorhergehenden Ansprüche, wobei der zumindest eine Steuerbefehl (41-48) unter Einbeziehung künstlicher Intelligenz oder maschinellen Lernens ermittelt beziehungsweise bestimmt wird.

6. Verfahren nach einem der vorhergehenden Ansprüche, wobei die erste Geräte-Steuervorrichtung (50, 60) eine zweite Geräte-Steuervorrichtung (70, 71) mit einem verschlüsselten Steuerbefehl (57, 67) steuert.

7. Verfahren nach einem der vorhergehenden Ansprüche, wobei die erste Geräte-Steuervorrichtung (50, 60) zumindest einen, vorzugsweise unverschlüsselten Geräte-Messwert (65) ermittelt, welcher bei der Erzeugung der Geräte-Steuerbefehle (51-54, 61-64) verwendet wird.

8. Verfahren nach einem der vorhergehenden Ansprüche, wobei die erste Geräte-Steuervorrichtung (50, 60) ein Schlüsselpaar mit einem privaten Schlüssel und einem öffentlichen Schlüssel (55) erzeugt und an Eingabevorrichtung (10) und die Steuerung (20) überträgt.

9. Verfahren nach einem der vorhergehenden Ansprüche, wobei die Geräte-Steuerbefehle (51-54, 61-64) verschlüsselte Geräte-Steuerbefehle (51, 52) und/oder unverschlüsselte Geräte-Steuerbefehle (53, 54, 61-64) aufweisen.

10. Verfahren nach einem der vorhergehenden Ansprüche, wobei die erste Geräte-Steuervorrichtung (60) zumindest einen verschlüsselten Steuerbefehl (66) von einer zweiten Geräte-Steuervorrichtung (72) empfängt und in dem zumindest einen Geräte-Steuerbefehl (61-64) berücksichtigt.

11. Vorrichtung (3, 4) zur Steuerung einer technischen Anlage (1, 2), umfassend eine Eingabevorrichtung (11, 12), eine Steuerung (20) und erste Geräte-Steuervorrichtung (50, 60), wobei die Eingabevorrichtung (10) dazu eingerichtet ist, zumindest einen Geräteparameter (11, 12) zu erfassen, zu verschlüsseln und als verschlüsselte Eingangsdaten (21, 22) an die Steuerung (20) zu übertragen, und
die Steuerung (20) dazu eingerichtet ist, aus den verschlüsselten Eingangsdaten (21, 22) und zumindest einer gespeicherten, verschlüsselten Modelleigenschaft (31, 36) zumindest einen verschlüsselten Steuerbefehl (41-48) zu erzeugen und an die erste Geräte-Steuervorrichtung (50, 60) zu übertragen, und
die erste Geräte-Steuervorrichtung (50, 60) dazu eingerichtet ist, mit Hilfe des zumindest eines verschlüsselten Steuerbefehles (41-48) die technische Anlage (1, 2) anzusteuern,
wobei die Vorrichtung (3, 4) dazu eingerichtet ist, die technische Anlage (1, 2) durch das Verfahren nach einem der vorhergehenden Ansprüche zu steuern.

12. Vorrichtung (3, 4) nach dem vorhergehenden Anspruch, wobei die Steuerung (20) in einer Cloud gelegen ist.

13. Vorrichtung (3, 4) nach einem der Ansprüche 11 oder 12, wobei die technische Anlage (1, 2) eine Produktionsanlage oder ein Gerät ist.

14. Vorrichtung (3, 4) nach einem der Ansprüche 11 bis 13, wobei die Geräte-Steuervorrichtung (50, 60, 70-72) eine speicherprogrammierbare Steuerung oder eine programmierbare Treiber-Schaltung ist.

## Claims

1. Method for controlling a technical installation (1, 2), **characterised in that**
a first device control apparatus (50, 60) transmits a public key (55) to an input apparatus (10) and a controller (20),
and the input apparatus (10) acquires at least one device parameter (11, 12), encrypts the same with the public key (55) and transmits it as encrypted input data (21, 22) to the controller (20),
and the controller (20) generates at least one encrypted control command (41-48), without decrypting the encrypted input data (21, 22) in the process, from the encrypted input data (21, 22) and at least one stored, encrypted model property (31, 36), which describes the technical installation (1, 2) by means of at least one mapping function (5, 6), and transmits the same to the first device control apparatus (50, 60),
and the first device control apparatus (50, 60) controls the technical installation (1, 2) with the aid of the at least one encrypted control command (41-48),
wherein during the encryption the input apparatus (10), the controller (20) and the first device control apparatus (50, 60) use a method to generate a homomorphic encryption.

2. Method according to the preceding claim, wherein the input apparatus acquires and encrypts at least two device parameters and transmits the same as encrypted input data to a controller.

3. Method according to one of the preceding claims, wherein the controller (20) supplies the generated at least one encrypted control command (41-48) to a process model (30, 35) of the technical installation (1, 2), wherein the process model (30, 35) describes the technical installation (1, 2), and the controller (20) uses the process model (30, 35) when the at least one encrypted control command (41-48) is generated.

4. Method according to the preceding claim, wherein the process model (30, 35) comprises a digital model, for instance in the form of a digital twin (31, 36), of the technical installation (1, 2) with process parameters, from which the at least one model property (32, 37) is derived,

5. Method according to one of the preceding claims, wherein the at least one control command (41-48) is ascertained or determined using artificial intelligence or machine learning.

6. Method according to one of the preceding claims, wherein the first device control apparatus (50, 60) controls a second device control apparatus (70, 71) with an encrypted control command (57, 67) .

7. Method according to one of the preceding claims, wherein the first device control apparatus (50, 60) determines at least one, preferably unencrypted device measured value (65), which is used when the device control commands (51-54, 61-64) are generated.

8. Method according to one of the preceding claims, wherein the first device control apparatus (50, 60) generates a key pair with a private key and a public key (55) and transmits the same to the input apparatus (10) and the controller (20).

9. Method according to one of the preceding claims, wherein the device control commands (51-54, 61-64) have encrypted device control commands (51, 52) and/or unencrypted device control commands (53, 54, 61-64).

10. Method according to one of the preceding claims, wherein the first device control apparatus (60) receives at least one encrypted control command (66) from a second device control apparatus (72) and takes the same into account in the at least one device control command (61-64).

11. Apparatus (3, 4) for controlling a technical installation (1, 2), comprising an input apparatus (11, 12), a controller (20) and first device control apparatus (50, 60),
wherein the input apparatus (10) is designed to acquire at least one device parameter (11, 12), to encrypt the same and to transmit it as encrypted input data (21, 22) to the controller (20), and
the controller (20) is designed to generate at least one encrypted control command (41-48) from the encrypted input data (21, 22) and at least one stored, encrypted model parameter (31, 36) and to transmit the same to the first device control apparatus (50, 60) and the first device control apparatus (50, 60) is designed to activate the technical installation (1, 2) with the aid of the at least one encrypted control command (41-48),
wherein the apparatus (3, 4) is designed to control the technical installation (1, 2) by means of the method according to one of the preceding claims.

12. Device (3, 4) according to the preceding claim, wherein the controller (20) is placed in a cloud.

13. Device (3, 4) according to one of claims 11 or 12, wherein the technical installation (1, 2) is a production installation or a device.

14. Apparatus (3, 4) according to one of claims 11 to 13, wherein the device control apparatus (50, 60, 70-72) is a programmable logic controller or a programmable driver circuit.

## Revendications

1. Procédé de commande d'une installation technique (1, 2), **caractérisé en ce que**
un premier dispositif de commande d'appareil (50, 60) transmet une clé publique (55) à un dispositif d'entrée (10) et à une commande (20),
et le dispositif d'entrée (10) acquiert au moins un paramètre d'appareil (11, 12), le crypte avec la clé publique (55) et le transmet à la commande (20) en tant que données d'entrée cryptées (21, 22),
et la commande (20) génère au moins une instruction de commande cryptée (41-48) à partir des données d'entrée cryptées (21, 22) et d'au moins une propriété de modèle cryptée stockée (31, 36) qui décrit l'installation technique (1, 2) par au moins une fonction de reproduction (5, 6), sans décrypter les données d'entrée cryptées (21, 22), et transmet l'instruction de commande au premier dispositif de commande d'appareil (50, 60),
et le premier dispositif de commande d'appareil (50, 60) commande l'installation technique (1, 2) à l'aide de l'au moins une instruction de commande cryptée (41-48),
le dispositif d'entrée (10), la commande (20) et le premier dispositif de commande d'appareil (50, 60) utilisant un procédé de génération d'un cryptage homomorphe lors du cryptage.

2. Procédé selon la revendication précédente, dans lequel le dispositif d'entrée acquiert au moins deux paramètres d'appareil, les crypte et les transmet à une commande en tant que données d'entrée cryptées.

3. Procédé selon l'une des revendications précédentes, dans lequel la commande (20) fournit l'au moins une instruction de commande cryptée générée (41-48) à un modèle de processus (30, 35) de l'installation technique (1, 2), le modèle de processus (30, 35) décrivant l'installation technique (1, 2), et la commande (20) utilisant le modèle de processus (30, 35) lors de la génération de l'au moins une instruction de commande cryptée (41-48).

4. Procédé selon la revendication précédente, dans lequel le modèle de processus (30, 35) comprend un modèle numérique, par exemple sous la forme d'un jumeau numérique (31, 36), de l'installation technique (1, 2) avec des paramètres de processus, duquel modèle l'au moins une propriété de modèle (32, 37) est dérivée.

5. Procédé selon l'une des revendications précédentes, dans lequel l'au moins une instruction de commande (41-48) est déterminée ou définie à l'aide de l'intelligence artificielle ou de l'apprentissage automatique.

6. Procédé selon l'une des revendications précédentes, dans lequel le premier dispositif de commande d'appareil (50, 60) commande un second dispositif de commande d'appareil (70, 71) au moyen d'une instruction de commande cryptée (57, 67).

7. Procédé selon l'une des revendications précédentes, dans lequel le premier dispositif de commande d'appareil (50, 60) détermine au moins une valeur de mesure d'appareil (65), de préférence non cryptée, qui est utilisée lors de la génération des instructions de commande d'appareil (51-54, 61-64).

8. Procédé selon l'une des revendications précédentes, dans lequel le premier dispositif de commande d'appareil (50, 60) génère une paire de clés avec une clé privée et une clé publique (55) et la transmet au dispositif d'entrée (10) et à la commande (20).

9. Procédé selon l'une des revendications précédentes, dans lequel les instructions de commande d'appareil (51-54, 61-64) comportent des instructions de commande d'appareil cryptées (51, 52) et/ou des instructions de commande d'appareil non cryptées (53, 54, 61-64).

10. Procédé selon l'une des revendications précédentes, dans lequel le premier dispositif de commande d'appareil (60) reçoit au moins une instruction de commande cryptée (66) d'un second dispositif de commande d'appareil (72) et la prend en compte dans l'au moins une instruction de commande d'appareil (61-64).

11. Dispositif (3, 4) de commande d'une installation technique (1, 2), comprenant un dispositif d'entrée (11, 12), une commande (20) et un premier dispositif de commande d'appareil (50, 60), le dispositif d'entrée (10) étant conçu pour acquérir au moins un paramètre d'appareil (11, 12), le crypter et le transmettre à la commande (20) en tant que données d'entrée cryptées (21, 22), et la commande (20) étant conçue pour générer au moins une instruction de commande cryptée (41-48) à partir des données d'entrée cryptées (21, 22) et d'au moins une propriété de modèle cryptée stockée (31, 36) et pour la transmettre au premier dispositif de commande d'appareil (50, 60), et
le premier dispositif de commande d'appareil (50, 60) étant conçu pour commander l'installation technique (1, 2) à l'aide de l'au moins une instruction de commande cryptée (41-48),
le dispositif (3, 4) étant conçu pour commander l'installation technique (1, 2) au moyen du procédé selon l'une des revendications précédentes.

12. Dispositif (3, 4) selon la revendication précédente, dans lequel la commande (20) est située dans un nuage.

13. Dispositif (3, 4) selon l'une des revendications 11 ou 12, dans lequel l'installation technique (1, 2) est une installation de production ou un appareil.

14. Dispositif (3, 4) selon l'une des revendications 11 à 13, dans lequel le dispositif de commande d'appareil (50, 60, 70-72) est un automate programmable industriel ou un circuit pilote programmable.
